# EUROPEAN PATENT APPLICATION

(11) **EP 1 731 536 A1**
(43) Date of publication of application: **13.12.2006**
(21) Application number: 05253551.5
(22) Date of filing: 09.06.2005
(51) Int. Cl.: C08F 10/00, C08F 4/64

(54) **Supported polymerisation catalysts**

(71) Applicant: Innovene Manufacturing France SAS, 95866 Cerav Pontoise Cedex (FR)
(72) Inventor: The designation of the inventor has not yet been filed
(74) Representative: Hawkins, David George

(57) **Abstract**

A method for the preparation of a supported polymerisation catalyst system, comprises
(1) contacting together in a suitable solvent
(a) a polymerisation catalyst and
(b) a cocatalyst,

(2) contacting the mixture from step (1) with a porous support material, and
(3) removing the solvent
is *characterised* in that the molar ratio of cocatalyst to polymerisation catalyst is < 10:1. The preferred polymerisation catalysts are transition metal compounds in particular metallocene complexes. Premixing the catalyst components before addition to the support leads to certain advantages in particular a more facile method of preparation without any loss in activity.

## Description

The present invention relates to supported catalysts suitable for the polymerization of olefins and in particular to the preparation of supported polymersation catalysts especially metallocene catalysts providing advantages for operation in for gas phase processes for the polymerisation of ethylene or the copolymerisation of ethylene and α-olefins having from 3 to 10 carbon atoms.

In recent years there have been many advances in the production of polyolefin homopolymers and copolymers due to the introduction of metallocene catalysts. Metallocene catalysts offer the advantage of generally a higher activity than traditional Ziegler catalysts and are usually described as catalysts which are single site in nature. There have been developed several different families of metallocene complexes. In earlier years catalysts based on bis (cyclopentadienyl) metal complexes were developed, examples of which may be found in EP 129368 or EP 206794. More recently complexes having a single or mono cyclopentadienyl ring have been developed. Such complexes have been referred to as 'constrained geometry' complexes and examples of these complexes may be found in EP 416815 or EP 420436. In both of these complexes the metal atom eg. zirconium is in the highest oxidation state.

Other complexes however have been developed in which the metal atom may be in a reduced oxidation state. Examples of both the bis (cyclopentadienyl) and mono (cyclopentadienyl) complexes have been described in WO 96/04290 and WO 95/00526 respectively.

The above metallocene complexes are utilised for polymerisation in the presence of a cocatalyst or activator. Typically activators are aluminoxanes, in particular methyl aluminoxane or alternatively may be compounds based on boron compounds. Examples of the latter are borates such as trialkyl-substituted ammonium tetraphenyl- or tetrafluorophenyl-borates or triarylboranes such as tris(pentafluorophenyl) borane. Catalyst systems incorporating borate activators are described in EP 561479, EP 418044 and EP 551277.

The above metallocene complexes may be used for the polymerisation of olefins in solution, slurry or gas phase. When used in the slurry or gas phase the metallocene complex and/or the activator are suitably supported. Typical supports include inorganic oxides eg. silica or polymeric supports may alternatively be used.

Examples of the preparation of supported metallocene catalysts for the polymerisation of olefins may be found in WO 94/26793, WO 95/07939, WO 96/00245, WO 96/04318, WO 97/02297 and EP 642536.

In prior art preparations of supported metallocene catalysts the catalyst components - metallocene complex and cocatalyst - are typically sequentially impregnated onto a suitable support material.

We have now found that by premixing the catalyst components before addition to the support leads to certain advantages in particular a more facile method of preparation without any loss in activity.

Thus according to the present invention there is provided a method for the preparation of a supported polymerisation catalyst system, said method comprising
(1) contacting together in a suitable solvent
   (a) a polymersation catalyst and
   (b) a cocatalyst,
(2) contact of the mixture from step (1) with a porous support material, and
(3) removal of the solvent.
*characterised* in that the molar ratio of cocatalyst to polymerisation catalyst is < 10:1.

The preferred molar ratio of cocatalyst to polymerisation catalyst is < 5:1 and most preferably < 3:1.

Suitable porous support materials include inorganic metal oxides or alternatively polymeric supports may be used for example polyethylene, polypropylene, clays, zeolites, etc.

Suitable inorganic metal oxides are SiO₂, Al₂O₃, MgO, ZrO₂, TiO₂, B₂O₃, CaO, ZnO and mixtures thereof.

The most preferred support material for use with the supported catalysts according to the method of the present invention is silica. Suitable silicas include Ineos ES70 and Grace Davison 948 silicas.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure.

The porous supports are preferably pretreated with an organometallic compound preferably an organoaluminium compound and most preferably a trialkylaluminium compound in a dilute solvent.

Preferred trialkylaluminium compounds are triethylaluminium or triisobutylaluminium.

The support material is pretreated with the organometallic compound at a temperature of -20°C to 150°C and preferably at 20°C to 100°C.

Other suitable supports may be those described in our application GB 03/05207.

The polymerisation catalyst of the present invention may suitably be any transition metal compound used in conjunction with a porous support in the present of a suitable cocatalyst.

The transition metal compound is typically a compound of Groups IIIA to IIB of the Periodic Table of Elements (IUPAC Version). Examples of such transition metal compounds are traditional Ziegler Natta, vanadium and Phillips-type catalysts well known in the art.

The traditional Ziegler Natta catalysts include transition metal compounds from Groups IVA - VIA, in particular catalysts based on titanium compounds of formula MRx where M is titanium and R is halogen or a hydrocarbyloxy group and x is the oxidation state of the metal. Such conventional type catalysts include TiCl₄, TiBr₄, Ti(OEt)₃Cl, Ti(OEt)₂Br₂ and similar. Traditional Ziegler Natta catalysts are described in more detail in "Ziegler-Natta Catalysts and Polymerisation" by J.Boor, Academic Press, New York, 1979.

Vanadium based catalysts include vanadyl halides eg. VCl₄, and alkoxy halides and alkoxides such as VOCl₃, VOCl₂(OBu), VCl₃(OBu) and similar.

Conventional chromium catalyst compounds referred to as Phillips type catalysts include CrO₃, chromocene, silyl chromate and similar and are described in US 4124532, US 4302565.

Other conventional transition metal compounds are those based on magnesium/titanium electron donor complexes described for example in US 4302565.

Other suitable transition metal compounds are those based on the late transition metals (LTM) of Group VIII for example compounds containing iron, nickel, manganese, ruthenium, cobalt or palladium metals. Examples of such compounds are described in WO 98/27124 and WO 99/12981 and may be illustrated by [2,6-diacetylpyridinebis(2,6-diisopropylanil)FeCl₂], 2.6-diacetylpyridinebis (2,4,6-trimethylanil) FeCl₂ and [2,6-diacetylpyridinebis(2,6-diisopropylanil)CoCl₂].

Other suitable compounds suitable for use as the polymerisation catalyst of the present invention include derivatives of Group IIIA, IVA or Lanthanide metals which are in the +2, +3 or +4 formal oxidation state. Preferred compounds include metal complexes containing from 1 to 3 anionic or neutral ligand groups which may be cyclic or non-cyclic delocalized π-bonded anionic ligand groups. Examples of such π-bonded anionic ligand groups are conjugated or non-conjugated, cyclic or non-cyclic dienyl groups, allyl groups, boratabenzene groups, phosphole and arene groups. By the term π-bonded is meant that the ligand group is bonded to the metal by a sharing of electrons from a partially delocalised π-bond.

Each atom in the delocalized π-bonded group may independently be substituted with a radical selected from the group consisting of hydrogen, halogen, hydrocarbyl, halohydrocarbyl, hydrocarbyl, substituted metalloid radicals wherein the metalloid is selected from Group IVB of the Periodic Table. Included in the term "hydrocarbyl" are C1 - C20 straight, branched and cyclic alkyl radicals, C6 - C20 aromatic radicals, etc. In addition two or more such radicals may together form a fused ring system or they may form a metallocycle with the metal.

Examples of suitable anionic, delocalised π-bonded groups include cyclopentadienyl, indenyl, fluorenyl, tetrahydroindenyl, tetrahydrofluorenyl, octahydrofluorenyl, etc. as well as phospholes and boratabenzene groups.

Phospholes are anionic ligands that are phosphorus containing analogues to the cyclopentadienyl groups. They are known in the art and described in WO 98/50392.

The boratabenzenes are anionic ligands that are boron containing analogues to benzene. They are known in the art and are described in Organometallics, 14, 1, 471 - 480 (1995).

The preferred polymerisation catalyst of the present invention is a bulky ligand compound also referred to as a metallocene complex containing at least one of the aforementioned delocalized π-bonded group, in particular cyclopentadienyl ligands. Such metallocene complexes are those based on Group IVA metals for example titanium, zirconium and hafnium.

Metallocene complexes may be represented by the general formula:

LxMQn

where L is a cyclopentadienyl ligand, M is a Group IVA metal, Q is a leaving group and x and n are dependent upon the oxidation state of the metal.

Typically the Group IVA metal is titanium, zirconium or hafnium, x is either 1 or 2 and typical leaving groups include halogen or hydrocarbyl. The cyclopentadienyl ligands may be substituted for example by alkyl or alkenyl groups or may comprise a fused ring system such as indenyl or fluorenyl.

Examples of suitable metallocene complexes are disclosed in EP 129368 and EP 206794. Such complexes may be unbridged eg. bis(cyclopentadienyl) zirconium dichloride, bis(pentamethyl)cyclopentadienyl dichloride, or may be bridged eg. ethylene bis(indenyl) zirconium dichloride or dimethylsilyl(indenyl) zirconium dichloride.

Other suitable bis(cyclopentadienyl) metallocene complexes are those bis(cyclopentadienyl) diene complexes described in WO 96/04290. Examples of such complexes are bis(cyclopentadienyl) zirconium (2.3-dimethyl-1,3-butadiene) and ethylene bis(indenyl) zirconium 1,4-diphenyl butadiene.

Examples of monocyclopentadienyl or substituted monocyclopentadienyl complexes suitable for use in the present invention are described in EP 416815, EP 418044, EP 420436 and EP 551277. Suitable complexes may be represented by the general formula:

CpMXₙ

wherein Cp is a single cyclopentadienyl or substituted cyclopentadienyl group optionally covalently bonded to M through a substituent, M is a Group VIA metal bound in a η⁵ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Particularly preferred monocyclopentadienyl complexes have the formula: 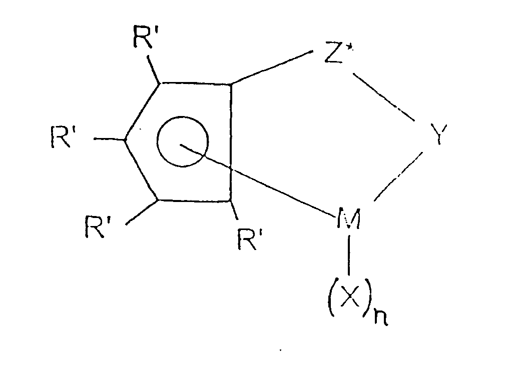 wherein:-
R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,
Y is -O-, -S-, -NR*-, -PR*-,
M is hafnium, titanium or zirconium,
Z* is SiR*₂, CR*₂, SiR*₂SIR*₂, CR*₂CR*₂, CR*=CR*, CR*₂SIR*₂, or GeR*₂, wherein:
   R* each occurrence is independently hydrogen, or a member selected from hydrocarbyl, silyl, halogenated alkyl, halogenated aryl, and combinations thereof, said
   R* having up to 10 non-hydrogen atoms, and optionally, two R* groups from Z* (when R* is not hydrogen), or an R* group from Z* and an R* group from Y form a ring system.,
   and n is 1 or 2 depending on the valence of M.

Examples of suitable monocyclopentadienyl complexes are (tert-butylamido) dimethyl (tetramethyl-η⁵- cyclopentadienyl) silanetitanium dichloride and (2-methoxyphenylamido) dimethyl (tetramethyl--η⁵- cyclopentadienyl) silanetitanium dichloride.

Other suitable monocyclopentadienyl metallocene complexes are those comprising phosphinimine ligands described in WO 99/40125, WO 00/05237, WO 00/05238 and WO00/32653. A typical examples of such a complex is cyclopentadienyl titanium [tri (tertiary butyl) phosphinimine] dichloride.

Particularly preferred metallocene complexes for use in the preparation of the supported catalysts of the present invention may be represented by the general formula: 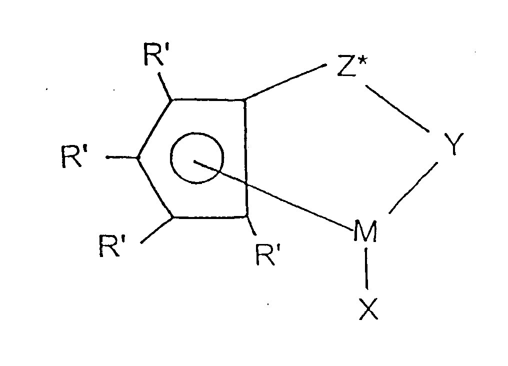 wherein:-
R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral η⁴ bonded diene group having up to 30 non-hydrogen atoms, which forms a π-complex with M;
Y is -O-, -S-, -NR*-, -PR*-,
M is titanium or zirconium in the + 2 formal oxidation state;
Z* is SiR*₂, CR*₂, SiR*₂SIR*₂, CR*₂CR*₂, CR*=CR*, CR*₂SIR*₂, or GeR*₂, wherein:
   R* each occurrence is independently hydrogen, or a member selected from hydrocarbyl, silyl, halogenated alkyl, halogenated aryl, and combinations thereof, said
   R* having up to 10 non-hydrogen atoms, and optionally, two R* groups from Z* (when R* is not hydrogen), or an R* group from Z* and an R* group from Y form a ring system.

Examples of suitable X groups include s-trans-η⁴-1,4-diphenyl-1,3-butadiene, s-trans-η⁴-3-methyl-1,3-pentadiene; s-tran-η⁴-2,4-hexadiene; s-trans-η⁴-1,3-pentadiene; s-trans-η⁴-1,4-ditolyl-1,3-butadiene; s-trans-η⁴-1,4-bis(trimethylsilyl)-1,3-butadiene; s-cis-η⁴-3-methyl-1,3-pentadiene; s-cis-η⁴-1,4-dibenzyl-1,3-butadiene; s-cis-η⁴-1,3-pentadiene; s-cis-η⁴-1,4-bis(trimethylsilyl)-1,3-butadiene, said s-cis diene group forming a π-complex as defined herein with the metal.

Most preferably R' is hydrogen, methyl, ethyl, propyl, butyl, pentyl, hexyl, benzyl, or phenyl or 2 R' groups (except hydrogen) are linked together, the entire C₅R'₄ group thereby being, for example, an indenyl, tetrahydroindenyl, fluorenyl, terahydrofluorenyl, or octahydrofluorenyl group.

Highly preferred Y groups are nitrogen or phosphorus containing groups containing a group corresponding to the formula -N(R^{//})- or -P(R^{//})- wherein R^{//} is C₁₋₁₀ hydrocarbyl.

Most preferred complexes are amidosilane - or amidoalkanediyl complexes.

Most preferred complexes are those wherein M is titanium.

Specific complexes suitable for use in the preparation of the supported catalysts of the present invention are those disclosed in WO 95/00526 and are incorporated herein by reference.

A particularly preferred complex for use in the preparation of the supported catalysts of the present invention is (t-butylamido) (tetramethyl-η⁵⁻cyclopentadienyl) dimethyl silanetitanium -η⁴-1.3 -pentadiene.

Suitable cocatalysts for use in the method of the present invention are those typically used with the aforementioned polymerisation catalysts.

These include aluminoxanes such as methyl aluminoxane (MAO), boranes such as tris(pentafluorophenyl) borane and borates.

Aluminoxanes are well known in the art and preferably comprise oligomeric linear and/or cyclic alkyl aluminoxanes. Aluminoxanes may be prepared in a number of ways and preferably are prepared by contacting water and a trialkylaluminium compound, for example trimethylaluminium, in a suitable organic medium such as benzene or an aliphatic hydrocarbon.

A preferred aluminoxane is methyl aluminoxane (MAO).

Other suitable cocatalysts are organoboron compounds in particular triarylboron compounds. A particularly preferred triarylboron compound is tris(pentafluorophenyl) borane.

Other compounds suitable as cocatalysts are compounds which comprise a cation and an anion. The cation is typically a Bronsted acid capable of donating a proton and the anion is typically a compatible non-coordinating bulky species capable of stabilizing the cation.

Such cocatalysts may be represented by the formula:

(L*-H)⁺_{d} (A^{d-})

wherein
L* is a neutral Lewis base
(L*-H)⁺_{d} is a Bronsted acid
A^{d-} is a non-coordinating compatible anion having a charge of d⁻, and
d is an integer from 1 to 3.

The cation of the ionic compound may be selected from the group consisting of acidic cations, carbonium cations, silylium cations, oxonium cations, organometallic cations and cationic oxidizing agents.

Suitably preferred cations include trihydrocarbyl substituted ammonium cations eg. triethylammonium, tripropylammonium, tri(n-butyl)ammonium and similar. Also suitable are N.N-dialkylanilinium cations such as N,N-dimethylanilinium cations.

The preferred ionic compounds used as cocatalysts are those wherein the cation of the ionic compound comprises a hydrocarbyl substituted ammonium salt and the anion comprises an aryl substituted borate..

Typical borates suitable as ionic compounds include:
triethylammonium tetraphenylborate
triethylammonium tetraphenylborate,
tripropylammonium tetraphenylborate,
tri(n-butyl)ammonium tetraphenylborate,
tri(t-butyl)ammonium tetraphenylborate,
N,N-dimethylanilinium tetraphenylborate,
N,N-diethylanilinium tetraphenylborate,
trimethylammonium tetrakis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
N,N-dimethylanilinium tetrakis(pentafluorophenyl) borate,
N,N-diethylanilinium tetrakis(pentafluorophenyl) borate.

A preferred type of cocatalyst suitable for use with the metallocene complexes of the present invention comprise ionic compounds comprising a cation and an anion wherein the anion has at least one substituent comprising a moiety having an active hydrogen.

Suitable cocatalysts of this type are described in WO 98/27119 the relevant portions of which are incorporated herein by reference.

Examples of this type of anion include:
triphenyl(hydroxyphenyl) borate
tri (p-tolyl)(hydroxyphenyl) borate
tris (pentafluorophenyl)(hydroxyphenyl) borate
tris (pentafluorophenyl)(4-hydroxyphenyl) borate

Examples of suitable cations for this type of cocatalyst include
triethylammonium, triisopropylammonium, diethylmethylammonium,
dibutylethylammonium and similar.

Particularly suitable are those cations having longer alkyl chains such as dihexyldecylmethylammonium, dioctadecylmethylammonium, ditetradecylmethylammonium, bis(hydrogentated tallow alkyl) methylammonium and similar.

Particular preferred cocatalysts of this type are alkylammonium tris(pentafluorophenyl) 4-(hydroxyphenyl) borates. A particularly preferred cocatalyst is bis(hydrogenated tallow alkyl) methyl ammonium tris (pentafluorophenyl) (4-hydroxyphenyl) borate.

With respect to this type of cocatalyst , a preferred compound is the reaction product of an alkylammonium tris(pentaflurophenyl)-4-(hydroxyphenyl) borate and an organometallic compound, for example triethylaluminium or an aluminoxane.

The method of the present invention is particularly suitable for use with metallocene complexes which have been treated with polymerisable monomers. Our earlier applications WO 04/020487 and WO 05/019275 describe supported catalyst compositions wherein a polymerisable monomer is used in the catalyst preparation.

Thus according to another aspect of the present invention there is provided a method for the preparation of a supported polymerisation catalyst system, said method comprising
(1) contacting together in a suitable solvent
   (a) a metallocene complex,
   (b) a cocatalyst, and
   (c) a polymerisable monomer,
(2) contacting the mixture from step (1) with a porous support material, and
(3) removal of the solvent.

Polymerisable monomers suitable for use in the method of the present invention include ethylene, propylene, 1-butene, 1-hexene, 1-octene, 1-decene, styrene, butadiene, and polar monomers for example vinyl acetate, methyl methacrylate, etc. Preferred monomers are those having 2 to 10 carbon atoms in particular ethylene, propylene, 1-butene or 1-hexene.

Alternatively a combination of one or more monomers may be used for example ethylene/1-hexene.

The preferred polymerisable monomer for use in the present invention is 1-hexene.

The polymerisable monomer is suitably used in liquid form or alternatively may be used in a suitable solvent. Suitable solvents include for example heptane.

The polymerisable monomer may be added to the cocatalyst before addition of the metallocene complex or alternatively the complex may be pretreated with the polymerisable monomer.

The supported catalyst systems of the present invention are most suitable for operation in processes which typically employ supported polymerisation catalysts.

The supported catalysts of the present invention may be suitable for the polymerisation of olefin monomers selected from (a) ethylene, (b) propylene (c) mixtures of ethylene and propylene and (d) mixtures of (a), (b) or (c) with one or more other alpha-olefins.

Thus according to another aspect of the present invention there is provided a process for the polymerisation of olefin monomers selected from (a) ethylene, (b) propylene (c) mixtures of ethylene and propylene and (d) mixtures of (a), (b) or (c) with one or more other alpha-olefins, said process performed in the presence of a supported polymerisation catalyst system prepared as hereinbefore described.

The supported systems of the present invention are however most suitable for use in slurry or gas phase processes.

A slurry process typically uses an inert hydrocarbon diluent and temperatures from about 0°C up to a temperature just below the temperature at which the resulting polymer becomes substantially soluble in the inert polymerisation medium. Suitable diluents include toluene or alkanes such as hexane, propane or isobutane. Preferred temperatures are from about 30°C up to about 200°C but preferably from about 60°C to 100°C. Loop reactors are widely used in slurry polymerisation processes.

Gas phase processes for the polymerisation of olefins, especially for the homopolymerisation and the copolymerisation of ethylene and α-olefins for example 1-butene, 1-hexene, 4-methyl-1-pentene are well known in the art.

Typical operating conditions for the gas phase are from 20°C to 100°C and most preferably from 40°C to 85°C with pressures from subatmospheric to 100 bar.

Particularly preferred gas phase processes are those operating in a fluidised bed. Examples of such processes are described in EP 89691 and EP 699213 the latter being a particularly preferred process for use with the supported catalysts of the present invention.

Particularly preferred polymerisation processes are those comprising the polymerisation of ethylene or the copolymerisation of ethylene and α-olefins having from 3 to 10 carbon atoms.

Thus according to another aspect of the present invention there is provided a process for the polymerisation of ethylene or the copolymerisation of ethylene and α-olefins having from 3 to 10 carbon atoms, said process performed under polymerisation conditions in the present of a supported catalyst system prepared as hereinbefore described.

The preferred α-olefins are 1-butene, 1-hexene, 4-methyl-1-pentene and 1-octene.

The supported catalysts prepared according to the present invention may also be suitable for the preparation of other polymers for example polypropylene, polystyrene, etc.

The method of the present invention has advantage of providing a more facile catalyst preparation and producing a good catalyst activity.

The present invention will now be illustrated with reference to the accompanying examples:

### Abbreviations

| | |
|---|---|
| TEA | triethylaluminium |
| MAO | methyl aluminoxane |
| TiBAO | tetraisobutyl aluminoxane |
| Ionic Compound A | [N(H)Me(C₁₈₋₂₂H₃₇₋₄₅)₂][B(C₆F₅)₃(p-OHC₆H₄)] |
| Complex A | (C₅Me₄SiMe₂N^{t}Bu)Ti(η⁴-1,3-pentadiene) |

### Example 1

To 1.6 ml (0.118 mmol) of a 9.58% solution of Ionic Compound A in toluene was added 0.49 ml of 1-hexene followed by 0.62 ml (0.93 ml) of a 10% solution of MAO in toluene (Al/B ratio ~8).

After 10 minutes, 0.67 ml (0.112 mmol) of a 8.63% solution of Complex A in heptane was further added under agitation. The mixture became warm but no precipitation was observed.

After 20 minutes, 2 g of silica/TEA ([Al] = 1.36 mmol/g) was added and the mixture was well agitated for 30 minutes to allow a good dispersion.

The mixture was finally dried under vacuum to yield a green free flowing powder.

### Example 2

To 1.65 ml (0.121 mmol) of a 9.58% solution of Ionic Compound A in toluene was added 0.15 ml (0.121 mmol) of cyclohexane solution of TIBAO (0.81 mol/l). After 15 minutes was added 0.49 ml of 1-hexene.

After 5 minutes, 0.67 ml (0.113 mmol) of a 8.63% solution of Complex A in heptane was further added under agitation. The mixture became warm but no precipitation was observed.

After 30 minutes, 2 g of silica/TEA ([Al] = 1.36 mmol/g) was added and the mixture was well agitated for 30 minutes to allow a good dispersion.

The mixture was finally dried under vacuum to yield a green free flowing powder.

### Example 3 - Polymerisation run

This catalysts were tested for ethylene - 1-hexene copolymerisation in an agitated dried phase reactor under the following conditions:
A 2.5 double jacketed thermostatic stainless steel autoclave was purged with nitrogen at 70°C for at least one hour. 70g of NaCl was used as the seed bed. 0.15 g of TEA treated silica (1.5 mmol TEA/g) was added under pressure and allowed to scavenge impurities for at least 15 minutes under agitation. The gas phase was then composed (addition of ethylene, 1-hexene and hydrogen) and a mixture of supported catalyst (see below) and silica/TEA (~0.1 g) was injected. A constant pressure of ethylene and a constant pressure ratio of ethylene/co-monomer were maintained during the run. The run was terminated by venting the reactor and then purging the reactor 3 times with nitrogen. The PE powder produced during the run was then separated from the PE seed bed by simple sieving.
Typical conditions are as follows:
- seed bed: dried NaCl (70g)
- scavenger: TEA treated silica (0.15 g)
- PC2: 10 b
- C6/C2 (% vol)= 0.3
- H2/C2 (% vol)= 0.2
- T° = 80°C
- run length: 80 minutes

At the end of the run the reactor content was washed several times with water to eliminate the salt bed and the obtained polymer was finally dried at 45°c overnight

The polymerisation results are summarised in the following table:

| Catalyst | Catalyst injected | Production | Yield |
|---|---|---|---|
| | mg | g | g/g |
| | | | |
| Example 1 | 12.7 | 8.59 | 676 |
| Example 2 | 9.9 | 7.48 | 756 |

Product analyses are summarised below

| Catalyst | Mn | Mw | Mw/Mn |
|---|---|---|---|
| | | | |
| Example 1 | 35200 | 90600 | 2.57 |
| Example 2 | 42900 | 115400 | 2.69 |

## Claims

1. A method for the preparation of a supported polymerisation catalyst system, said method comprising
(1) contacting together in a suitable solvent
(a) a polymerisation catalyst, and
(b) a cocatalyst,
(2) contact of the mixture from step (1) with a porous support material, and
(3) removal of the solvent.
***characterised* in that** the molar ratio of cocatalyst to polymerisation catalyst is < 10:1.
